# EUROPÄISCHE PATENTSCHRIFT

(11) **EP 0 808 267 B1**
(45) Veröffentlichungstag und Bekanntmachung des Hinweises auf die Patenterteilung: **04.08.1999**
(21) Anmeldenummer: 96901723.5
(22) Anmeldetag: 10.02.1996
(51) Int. Cl.: B62D 5/097

(54) **HYDRAULISCHE LENKEINRICHTUNG MIT LASTSIGNAL**
HYDRAULIC STEERING SYSTEM WITH LOAD SIGNAL
SYSTEME DE DIRECTION HYDRAULIQUE A SIGNAL DE CHARGE

(30) Priorität: 18.02.1995 DE 19505592
(43) Veröffentlichungstag der Anmeldung: 26.11.1997
(73) Patentinhaber: Rexroth Hydraulik Parchim GmbH & Co. KG, 19370 Parchim (DE)
(72) Erfinder: BERGMANN, Erhard, D-19079 Mirow (DE); SCHILDMANN, Manfred, D-19372 Karrenzin (DE); VOSS, Gerhard, D-19370 Parchim (DE)
(74) Vertreter: Jaap, Reinhard
(86) Internationale Anmeldenummer: DE9600217
(87) Internationale Veröffentlichungsnummer: WO9626099

(56) Entgegenhaltungen:
- EP-A- 0 061 005
- EP-A- 0 561 401
- DE-A- 4 410 693
- GB-A- 2 014 096
- US-A- 4 730 544

## Beschreibung

Die Erfindung bezieht sich auf eine Lenkeinrichtung nach dem Oberbegriff des Anspruchs 1.

Solche Lenkeinrichtungen kommen in mobilen Anlagen zum Einsatz, die aus einem Lenkkreislauf und aus einem Arbeitskreislauf bestehen und die beide von einer gemeinsamen Pumpe versorgt werden, wobei der Lenkkreislauf Priorität besitzt.

Anlagen dieser Art bestehen in der Hauptsache aus einer gemeinsamen Versorgungspumpe und einem gemeinsamen Stromteilventil, sowie der Lenkeinrichtung und einem Lenkzylinder einerseits und einem Arbeitskreislauf andererseits. Das Stromteilventil ist federbelastet ausgeführt und erhält sein Steuersignal als sogenanntes Lastsignal aus der hydraulischen Lenkeinrichtung. Nach diesem Lastsignal reguliert das Stromteilventil seine Durchflußquerschnitte in der Art, daß der Lenkkreislauf vorrangig und bedarfsgerecht und der Arbeitskreislauf mit dem überschüssigen Drucköl versorgt wird. Es ist bekannt, das Lastsignal statisch oder dynamisch aufzubereiten. Auf Grund der hohen Reaktionsfähigkeit eines dynamischen Lastsignales setzt sich diese Aufbereitungsart in der Praxis verstärkt durch.

Eine derartige Lenkeinrichtung ist beispielsweise in der GB-A-2014096 beschrieben, die aus einer Verdrängereinheit und einer Steuereinheit mit einem inneren Steuerkolben und einer äußeren Steuerhülse besteht, die beide miteinander und mit der Verdrängereinheit kommunizierende Kanäle besitzen. Die Kanäle bilden eine Hauptleitung, die vom Eingangsanschluß über die Verdrängereinheit und über den Lenkzylinder zum Rücklaufanschluß führt und in der eine verstellbare Eingangsdrossel und weitere verstellbare Drosseln angeordnet sind.

Die Kanäle bilden weiterhin eine erste Nebenleitung, die von der Hauptleitung stromabwärts der verstellbaren Eingangsdrossel zum Rücklaufanschluß führt und in der sich eine erste und eine zweite verstellbare Lastsignaldrossel befinden. Und die Kanäle bilden weiter eine zweite Nebenleitung, die vom Lastsignalanschluß zur ersten Nebenleitung verläuft und die zwischen der ersten und der zweiten verstellbaren Lastsignaldrossel einmündet.

Dabei sind die verstellbare Eingangsdrossel und die zweite verstellbare Lastsignaldrossel in ihrer Schließcharakteristik gleichgerichtet, während die erste verstellbare Lastsignaldrossel dazu entgegengerichtet schließt.

Diese Lenkeinrichtung hat den Nachteil, den alle lastsignalgesteuerten Lenkeinrichtungen aufweisen. Bei unbetätigter Lenkung ist der gesamte Lastsignalstrom und bei nur teilweiser Auslenkung ist ein bestimmter Anteil als Verluststrom zu werten, der sich damit ungünstig auf die Energiebilanz der hydraulischen Anlage auswirkt.

Es besteht ein weiterer Nachteil, der sich bei allen Lenkeinrichtungen in Closed-Center-Ausführung einstellt. Wenn der Lenkzylinder einer Closed-Center-Lenkeinrichtung durch eine äußere Kraft in Lenkrichtung ziehend belastet ist und die Steuereinheit der Lenkeinrichtung von der Neutralstellung in die entsprechende Arbeitsstellung ausgelenkt wird, läuft der Lenkzylinder dem dosierten Lenkölstrom vorweg, was zu einem unkontrollierten Lenkverhalten in dieser Phase führt.

Aus der EP 0561 401 A1 ist eine Lenkeinrichtung mit vergleichsweise gattungsgemäßer Ausführung bekannt. Diese Lenkeinrichtung ist jedoch mit einem open Center ausgestattet und besitzt einen Drucksignalanschluß für einen Druckschalter zum Betätigen des elektrisch betriebenen Motors für die Hydraulikpumpe.

Für den vorgesehenen Einsatz ist die Lenkeinrichtung daher ungeeignet.

Es besteht die Aufgabe, eine Lenkeinrichtung mit einem dynamischen Lastsignalanschluß derart auszubilden, daß der Lenkzylinder beim Anlenkvorgang hydraulisch beliebig fest eingespannt ist.

Diese Aufgabe wird durch die kennzeichnenden Merkmale des Anspruchs 1 gelöst.

Zweckdienliche Ausgestaltungen ergeben sich aus den Merkmalen der Unteransprüche 2 und 3.

Diese Lenkeinrichtung ist in vieler Hinsicht vorteilhaft.

So verbessert sie das angestrebte Lenkverhalten bei einer ziehenden Belastung des Lenkzylinders dadurch, daß allein die verstellbare Eingangsdrossel länger geschlossen bleibt und dadurch in einem Lenkbereich mit begrenzter Lenkdrehzahl ausschließlich der vorhandene Lastsignalstrom für die Lenkbetätigung genutzt werden kann. Die Lenkeinrichtung arbeitet in dieser Phase nach dem Open-Center-Prinzip. Dadurch ist es möglich, den Ablaufdruck des Lenkzylinders beim Beginn des Lenkvorganges vorherzubestimmen. Da der Lastsignalstrom jetzt größtmöglich genutzt wird, verbessert sich auch der energetische Wirkungsgrad der Lenkeinrichtung im entsprechenden Maße. Die Lenkeinrichtung wird außerdem reaktionsschneller.

Die Erfindung soll nachfolgend an einem Ausführungsbeispiel näher erläutert werden.

Dazu zeigen
- Fig. 1:: ein vereinfachtes Schaltbild einer Lenkeinrichtung mit Lastsignal,
- Fig. 2:: eine Lenkeinrichtung im Schnitt,
- Fig. 3:: ein Diagramm mit dem Schließ- und Öffnungsverlauf der beteiligten Verstelldrosseln,
- Fig. 4:: die Steuereinheit in Neutralstellung,
- Fig. 5:: die Steuereinheit in leicht ausgelenkter Stellung,
- Fig. 6:: die Steuereinheit in weiter ausgelenkter Stellung,
- Fig. 7:: die Steuereinheit in maximal ausgelenkter Stellung,
- Fig. 8:: ein Diagramm mit dem Schließ- und Öffnungsverlauf der beteiligten Verstelldrosseln bei einer zweckdienlichen Ausgestaltung der Lenkeinrichtung und
- Fig. 9:: diese zweckdienliche Ausgestaltung der Lenkeinrichtung.

Der Kreislauf einer Hydraulikanlage für einen Lenkungskreislauf und einen oder mehrere Arbeitskreisläufe ist allgemein bekannt und daher nicht gesondert dargestellt. Er besteht aus einer gemeinsamen Versorgungspumpe und einem gemeinsamen Stromteilventil.

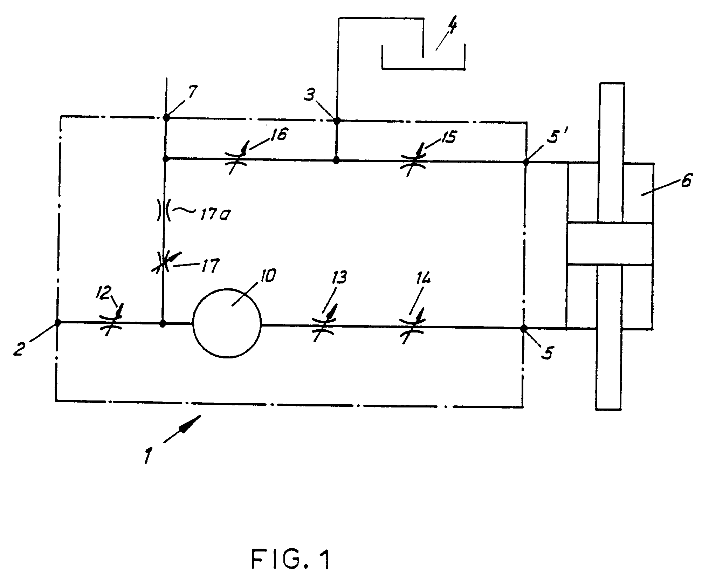

Wie die Fig. 1 zeigt, besitzt die Lenkeinrichtung 1 einen Zulaufanschluß 2, der mit dem Lenkungsanschluß des Stromteilventils verbunden ist, einen Rücklaufanschluß 3, der mit einem Tank 4 Verbindung hat, zwei Zylinderanschlüsse 5 und 5', die zu einem Lenkzylinder 6 führen und einen Lastsignalanschluß 7, der mit der zum Zulaufanschluß 2 führenden Leitung und mit der federbelasteten Seite des Stromteilventiles verbunden ist.

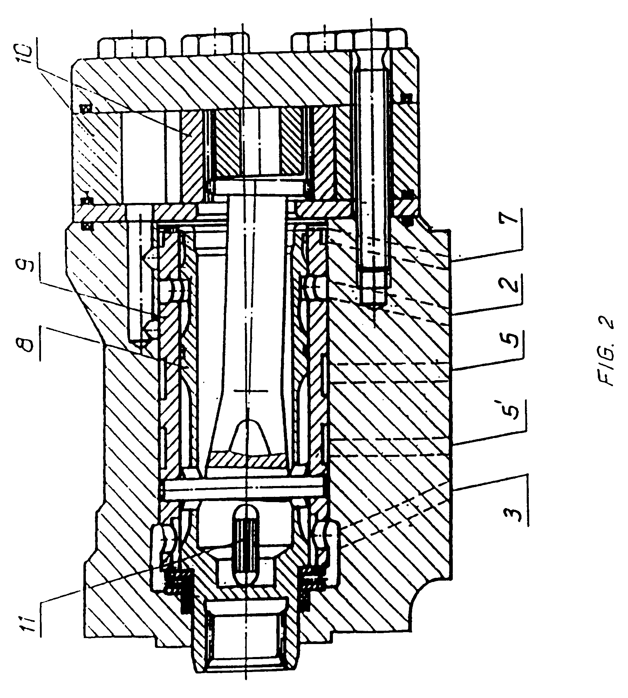

Wie insbesondere die Fig. 2 zeigt, besteht die Lenkeinrichtung 1 in der Hauptsache aus einer Steuereinheit mit einem inneren Steuerkolben 8 und einer äußeren Steuerhülse 9 und einer nach dem Gerotorprinzip arbeitenden Verdrängereinheit 10. Der Steuerkolben 8 und die Steuerhülse 9 besitzen miteinander und mit der Verdrängereinheit 10 kommunizierende axiale und radiale Kanäle und sind gegen die Kraft einer Feder 11 in einem begrenzten Winkel zueinander drehbar. Die Steuerhülse 9 ist mechanisch mit der Verdrängereinheit verbunden.

Nach der Fig 1 bilden die Kanäle in der Steuereinheit der Lenkeinrichtung 1 eine Hauptleitung, die vom Zulaufanschluß 2 über die Verdrängereinheit 10, den Lenkzylinder 6 bis zum Rücklaufanschluß 3 verläuft. Im Wesentlichen befinden sich in dieser Hauptleitung zwischen dem Zulaufanschluß 2 und der Verdrängereinheit 10 eine verstellbare Eingangsdrossel 12, zwischen der Verdrängereinheit 10 und dem Lenkzylinder 6 zwei Verstelldrosseln 13 und 14 und zwischen dem Lenkzylinder 6 und dem Rücklaufanschluß 3 eine verstellbare Rücklaufdrossel 15. Die Kanäle in der Steuereinheit der Lenkeinrichtung 1 bilden weiterhin eine erste Nebenleitung, die von der Hauptleitung stromabwärts der verstellbaren Eingangsdrossel 12 zum Rücklaufanschluß 3 verläuft und in der sich eine erste verstellbare Lastsignaldrossel 16, eine zweite verstellbare Lastsignaldrossel 17 und eine Konstantdrossel 17a befinden.

Die Kanäle in der Steuereinheit der Lenkeinrichtung 1 bilden auch eine zweite Nebenleitung, die vom Lastsignalanschluß 7 zur ersten Nebenleitung verläuft und hier zwischen der ersten verstellbaren Lastsignaldrossel 16 und der zweiten verstellbaren Lastsignaldrossel 17 einmündet.

Dabei sind die verstellbare Eingangsdrossel 12, die verstellbare Rücklaufdrossel 15 und die zweite verstellbare Lastsignaldrossel 17 in ihrer Schließcharakteristik gleichgerichtet. Die erste verstellbare Lastsignaldrossel 16 schließt zu den eben genannten verstellbaren Drosseln 12, 15 und 17 entgegengerichtet.

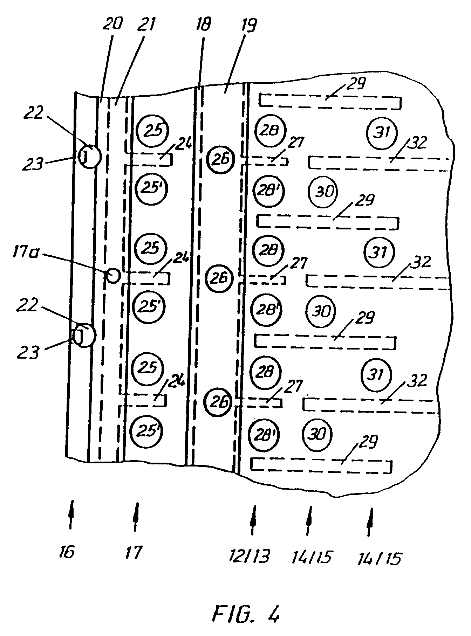

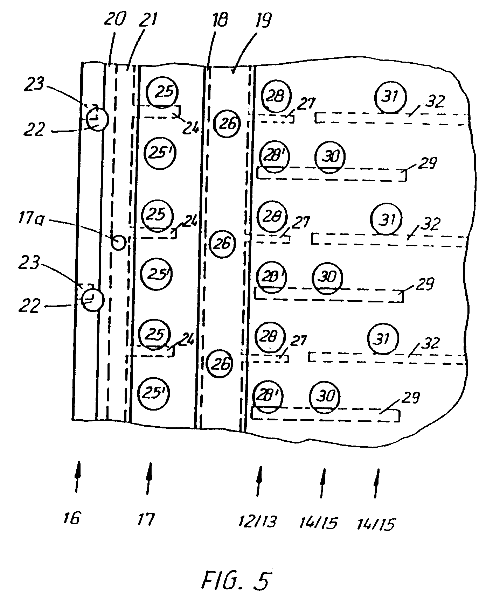

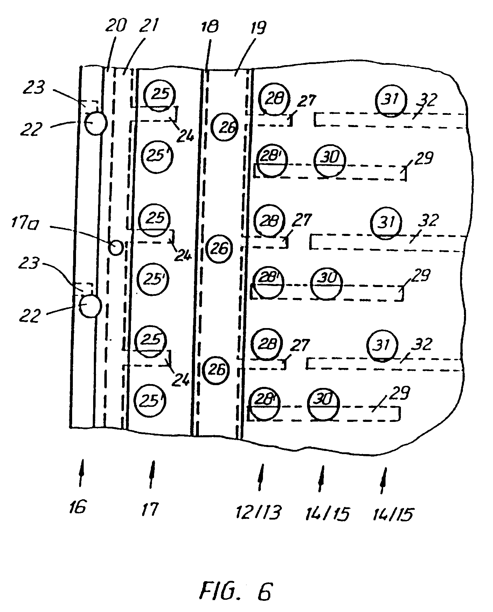

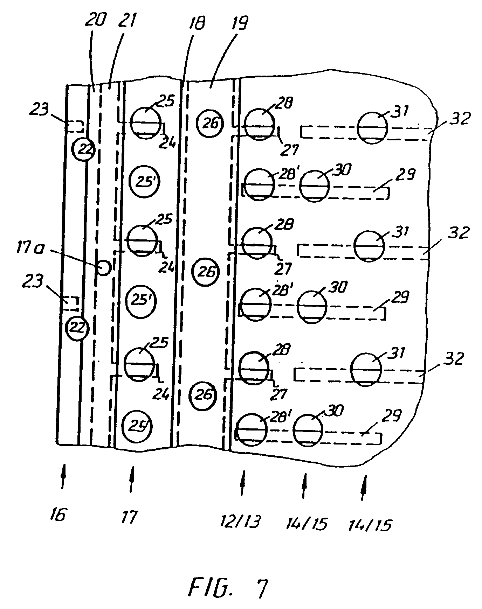

Die konstruktive Gestaltung einer entsprechenden Lenkeinrichtung ergibt sich aus den Fig. 4 bis 7.

Ein Ringkanal 18 der Steuerhülse 9 und ein Ringkanal 19 des Steuerkolbens 8 für den Eingangsstrom sowie ein Ringkanal 20 der Steuerhülse 9 und ein Ringkanal 21 des Steuerkolbens 8 für den Lastsignalstrom befinden sich jeweils in Überdeckung. Radiale Bohrungen 22 der Steuerhülse 9 mit Verbindung zum Ringkanal 20 und entsprechend angeordnete Schlitze 23 im Steuerkolben 8 mit Verbindung zum Innenraum der Steuereinheit bilden die erste verstellbare Lastsignaldrossel 16.

Im Ringkanal 21 des Steuerkolbens 8 verlaufen mehrere, verteilt angeordnete axiale Schlitze 24 mit begrenzter Länge, die zu an beiden Seiten angeordneten radialen Bohrungen 25, 25' der Steuerhülse 9 in negativer Überdeckung stehen. Die Schlitze 24 und die Bohrungen 25, 25' bilden die zweite verstellbare Lastsignaldrossel 17. Der Ringkanal 18 der Steuerhülse 9 für den Eingangsstrom steht über mehrere gleichmäßig am Umfang verteilt angeordnete radiale Bohrungen 26 mit dem Ringkanal 19 des Steuerkolbens 8 in Verbindung. Dieser Ringkanal 19 besitzt wiederum axiale Schlitze 27 mit begrenzter Länge. Diese Schlitze 27 stehen auch zu beidseitig angeordneten radialen Bohrungen 28, 28' der Steuerhülse 9 in negativer Überdeckung und bilden zusammen die verstellbare Eingangsdrossel 12.

Die Bohrungen 28, 28' der Steuerhülse 9 und Schlitze 29 des Steuerkolbens 8 bilden die Verstelldrossel 13. Weitere versetzt angeordnete Reihen von Bohrungen 30 und 31 in der Steuerhülse 9 bilden im Zusammenwirken mit den Schlitzen 29 und weiteren Schlitzen 32 im Steuerkolben 8 je nach Drehrichtung die Verstelldrossel 14 bzw. die verstellbare Rücklaufdrossel 15.

Erfindungsgemäß sind die radialen Abstände sowohl bei negativer oder positiver Überdeckung von Bohrungen 22, 25, 25', 28, 28', 30 und 31 der Steuerhülse 9 als auch der Schlitze 23, 24, 27, 29 und 32 des Steuerkolbens 8, die in entsprechender Weise die erste verstellbare Lastsignaldrossel 16, die zweite verstellbare Lastsignaldrossel 17, die verstellbare Eingangsdrossel 12, die Verstelldrossel 13, die Verstelldrossel 14 und die verstellbare Rücklaufdrossel 15 bilden, aufeinander abgestimmt.

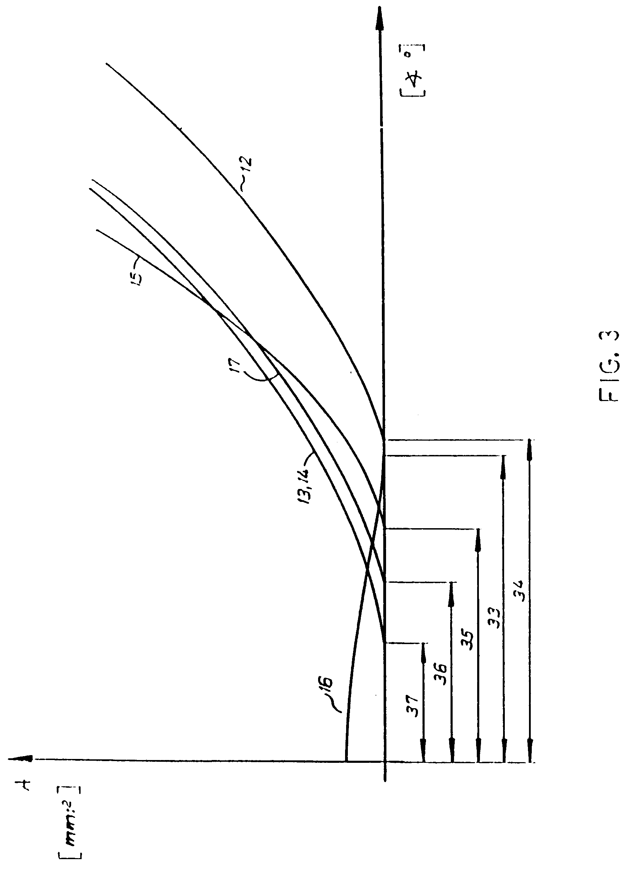

So bezieht sich der Auslenkwinkel 33 in Fig. 3 auf die positive Überdeckung der Bohrungen 22 und der Schlitze 23 der ersten verstellbaren Lastsignaldrossel 16.

So bezieht sich der Auslenkwinkel 34 auf die negative Überdeckung der Bohrungen 28, 28' und der Schlitze 27 der verstellbaren Eingangsdrossel 12.

So bezieht sich der Auslenkwinkel 35 auf die negative Überdeckung der Bohrungen 30, 31 und der Schlitze 32 der verstellbaren Rücklaufdrossel 15.

So bezieht sich der Auslenkwinkel 36 auf die negative Überdeckung der Bohrungen 25, 25' und der Schlitze 24 der zweiten verstellbaren Lastsignaldrossel 17.

So bezieht sich der Auslenkwinkel 37 auf die negative Überdeckung der Bohrungen 28, 28' bzw. der Bohrungen 30 und 31 und der Schlitze 29 der Verstelldrosseln 13 und 14.

Aus der geschlossenen Neutralstellung des Steuerventiles betrachtet verhalten sich die Auslenkwinkel der einzelnen Drosseln zueinander wie folgt:

Der Auslenkwinkel 33 ist gleich oder kleiner als der Auslenkwinkel 34.

Die Auslenkwinkel 35, 36 und 37 sind in dieser Reihenfolge um jeweils einen größer werdenden Betrag kleiner als der Auslenkwinkel 33.

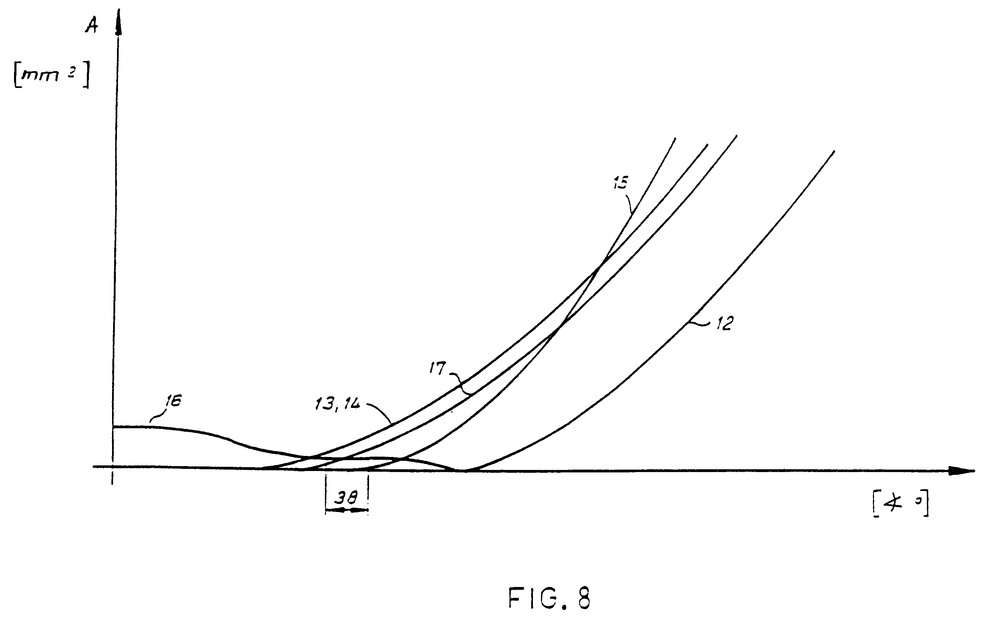

In einer zweckdienlichen Ausgestaltung der Lenkeinrichtung ist die erste verstellbare Lastsignaldrossel 16 in besonderer Weise gestaltet, um im Zusammenspiel der ersten verstellbaren Lastsignaldrossel 16 und der verstellbaren Rücklaufdrossel 15, das den angestrebten Vorspanndruck zwischen dem Lenkzylinder 6 und der verstellbaren Rücklaufdrossel 15 bestimmt, immer mögliche Fertigungstoleranzen auszugleichen. Dazu ist die Öffnungscharakteristik der ersten verstellbaren Lastsignaldrossel 16 so ausgebildet, daß sich der Öffnungsquerschnitt über einen vorbestimmten Auslenkwinkel der Steuereinheit nicht verkleinert. Dieser über den Auslenkwinkel liegende Abstand 38 in Fig. 8 ist so gelegt, daß der Öffnungspunkt der verstellbaren Rücklaufdrossel 15 im Bereich dieses Abstandes 38 liegt.

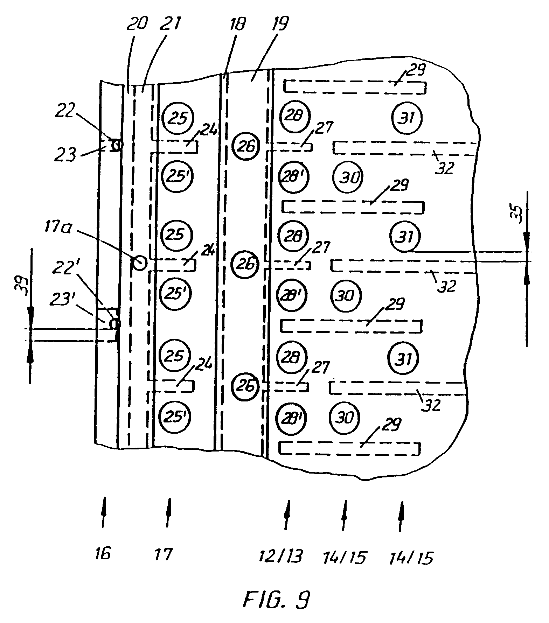

Dazu ist nach Fig. 9 mindestens eine der aus den Bohrungen 22 und den Schlitzen 23 gebildeten ersten verstellbaren Lastsignaldrossel 16 mit einem verbreiterten Schlitz 23' und/oder einer verkleinerten Bohrung 22' ausgebildet. Die Breite des Schlitzes 23' und der Durchmesser der Bohrung 22' sind so bemessen, daß ein Abstand 39 für eine positive Überdeckung besteht, der größer als der Auslenkwinkel 35 für die negative Überdeckung der verstellbaren Rücklaufdrossel 15 ist. Gleichzeitig sind die Bohrungen 22 und die Schlitze 23 in ihrem Durchmesser und in ihrer Breite so ausgelegt, daß ihre positive Überdeckung kleiner als der Auslenkwinkel 35 ist.

In der Neutralstellung der Lenkeinrichtung 1 nach Fig. 4 ist die verstellbare Eingangsdrossel 12 geschlossen, da die Schlitze 27 und die Bohrungen 28, 28' nicht in Überdeckung stehen. Ebenfalls geschlossen sind die zweite verstellbare Lastsignaldrossel 17, die Verstelldrosseln 13 und 14 und die verstellbare Rücklaufdrossel 15. Dagegen ist die erste verstellbare Lastsignaldrossel 16 voll geöffnet, da die Bohrungen 22 und die Schlitze 23 sich in positiver Überdeckung befinden. Das von der Versorgungspumpe bereitgestellte Öl baut auf Grund der geschlossenen verstellbaren Eingangsdrossel 12 vor dem Zulaufanschluß 2 einen Druck auf, der das Stromteilventil zur Arbeitshydraulik umschaltet und der einen vorgegebenen Lastsignalstrom über die offene erste verstellbare Lastsignaldrossel 16 zum Rücklaufanschluß 3 und damit zum Tank 4 fließen läßt.

Bei Auslenkung des Steuerkolbens 8 gegenüber der Steuerhülse 9 und bei kleiner Drehzahl beginnt zunächst die erste verstellbare Lastsignaldrossel 16 zu schließen. Dadurch wird der Lastsignalstrom von bestimmter Größe entsprechend angedrosselt. Bei weiterer Auslenkung des Steuerkolbens 8 beginnen nacheinander die Verstelldrosseln 13 und 14 und die zweite verstellbare Lastsignaldrossel 17 zu öffnen. Der so angestaute Druck des Lastsignalstromes liegt somit an einem der Zylinderanschlüsse 5, 5' an und beaufschlagt den Lenkzylinder 6 in entsprechender Weise. Da die verstellbare Rücklaufdrossel 15 noch geschlossen ist, wird der Lenkzylinder 6 eingespannt und kann keiner äußeren Belastung folgen. Bei einer weiteren Auslenkung des Steuerkolbens 8, wenn die erste verstellbare Lastsignaldrossel 16 noch geöffnet ist, beginnt die verstellbare Rücklaufdrossel 15 zu öffnen. Damit beginnt der Lenkvorgang unter Nutzung des Lastsignalstromes nach dem Open-Center-Prinzip mit vorherbestimmtem Ablaufdruck des Lenkzylinders 6.

So stellt sich zwischen den Öffnungsquerschnitten der ersten verstellbaren Lastsignaldrossel 16 und der zweiten verstellbaren Lastsignaldrossel 17 nach dem Stromteilprinzip ein Gleichgewichtszustand ein, der von der äußeren Belastung des Lenkzylinders 6 und der gewählten Lenkdrehzahl abhängt.

Beträgt der Lastsignalstrom beispielsweise 1 dm³/min und fördert die Verdrängereinheit 10 der Lenkeinrichtung 1 beispielsweise 100 cm³/U, dann ermöglicht der Lastsignalstrom allein eine Lenkdrehzahl von bis zu 10 U/min. Steigt die Lenkdrehzahl und damit der benötigte Ölstrom über die Größe des Lastsignalstromes hinaus an, dann öffnet die verstellbare Eingangsdrossel 12. In diesem Zustand ist die erste verstellbare Lastsignaldrossel 16 geschlossen. Der Lenkvorgang verläuft nun wieder nach dem Closed-Center-Prinzip unter vollständiger Nutzung der Ölströme aus dem Zulaufanschluß 2 und dem Lastsignalanschluß 7.

### Aufstellung der Bezugszeichen

- 1: Lenkeinrichtung
- 2: Zulaufanschluß
- 3: Rücklaufanschluß
- 4: Tank
- 5, 5': Zylinderanschlüsse
- 6: Lenkzylinder
- 7: Lastsignalanschluß
- 8: Steuerkolben
- 9: Steuerhülse
- 10: Verdrängereinheit
- 11: Feder
- 12: verstellbare Eingangsdrossel
- 13: Verstelldrossel
- 14: Verstelldrossel
- 15: verstellbare Rücklaufdrossel
- 16: erste verstellbare Lastsignaldrossel
- 17: zweite verstellbare Lastsignaldrossel
- 17a: Konstantdrossel
- 18: Ringkanal
- 19: Ringkanal
- 20: Ringkanal
- 21: Ringkanal
- 22, 22': Bohrungen
- 23, 23': Schlitze
- 24: Schlitze
- 25, 25': Bohrungen
- 26: Bohrungen
- 27: Schlitze
- 28, 28': Bohrungen
- 29: Schlitze
- 30: Bohrungen
- 31: Bohrungen
- 32: Schlitze
- 33: Auslenkwinkel
- 34: Auslenkwinkel
- 35: Auslenkwinkel
- 36: Auslenkwinkel
- 37: Auslenkwinkel
- 38: Abstand
- 39: Abstand

## Patentansprüche

1. Hydraulische Lenkeinrichtung mit Lastsignal, bestehend aus einer Verdrängereinheit (10) und einer Steuereinheit mit einem inneren Steuerkolben (8) und einer äußeren Steuerhülse (9), die beide miteinander und mit der Verdrängereinheit (10) kommunizierende radiale und axiale Kanäle besitzen und die Kanäle
- eine Hauptleitung von einem Eingangsanschluß (2), über die Verdrängereinheit (10) und einem Lenkzylinder (6) zu einem Rücklaufanschluß (3) bilden, in der zwischen dem Eingangsanschluß (2) und der Verdrängereinheit (10) eine verstellbare Eingangsdrossel (12), zwischen der Verdrängereinheit (10) und dem Lenkzylinder (6) zwei Verstelldrosseln (13, 14) und zwischen der Verdrängereinheit (10) und dem Rücklaufanschluß (3) eine verstellbare Rücklaufdrossel (15) angeordnet sind und
- eine erste Nebenleitung von der Hauptleitung stromabwärts der verstellbaren Eingangsdrossel (12) zum Rücklaufanschluß (3) bilden, in der eine erste und eine zweite Lastsignaldrossel (16, 17) in Reihe angeordnet sind und
- eine zweite Nebenleitung bilden, die den Lastsignalanschluß (7) mit dem Zulaufanschluß (2) verbindet und dazu in die erste Nebenleitung in Höhe zwischen der ersten und der zweiten verstellbaren Lastsignaldrossel (16, 17) einmündet,
- wobei in der Neutralstellung die erste verstellbare Lastsignaldrossel (16) gegenüber den anderen Verstelldrosseln eine positive Überdeckung besitzt,
**dadurch gekennzeichnet**, daß der Auslenkwinkel (33) der positiven Überdeckung der ersten verstellbaren Lastsignaldrossel (16) gleich oder kleiner als der Auslenkwinkel (34) der negativen Überdeckung der verstellbaren Eingangsdrossel (12) ausgebildet ist und daß die Auslenkwinkel (35, 36, 37) der negativen Überdeckungen der verstellbaren Rücklaufdrossel (15), der zweiten verstellbaren Lastsignaldrossel (17) und der beiden Verstelldrosseln (13, 14) kleiner als der Auslenkwinkel (33) der positiven Überdeckung der ersten verstellbaren Lastsignaldrossel (16) sind.

2. Hydraulische Lenkeinrichtung nach Anspruch 1,
**dadurch gekennzeichnet**, daß die Auslenkwinkel (35, 36, 37) der verstellbaren Rücklaufdrossel (15), der zweiten verstellbaren Lastsignaldrossel (17) und Verstelldrosseln (13, 14) in dieser Reihenfolge um jeweils einen größer werdenden Betrag kleiner als der Auslenkwinkel (33) der ersten verstellbaren Lastsignaldrossel (16) ausgelegt sind.

3. Hydraulische Lenkeinrichtung nach Anspruch 1,
**dadurch gekennzeichnet**, daß der offene Drosselquerschnitt der ersten verstellbaren Lastsignaldrossel (16) im Bereich des Öffnungsbeginns der verstellbaren Rücklaufdrossel (15) über einen vorbestimmbaren Abstand (38) des Auslenkwinkels (33) weitesgehend konstantbleibend ausgelegt ist.

4. Hydraulische Lenkeinrichtung nach Anspruch 3,
**dadurch gekennzeichnet**, daß in der Neutralstellung der Durchmesser der Bohrungen (22) und die Breite der Schlitze (23) der ersten verstellbaren Lastsignaldrosseln (16) eine positive Überdeckung bilden, die kleiner als der Auslenkwinkel (35) der negativen Überdeckung der Rücklaufdrossel (15) ist und mindestens eine der ersten verstellbaren Lastsignaldrosseln (16) einen Abstand (39) der positiven Überdeckung bildet, der größer als der Auslenkwinkel (35) der negativen Überdeckung der Rücklaufdrossel (15) ist.

5. Hydraulische Lenkeinrichtung nach Anspruch 4,
**dadurch gekennzeichnet**, daß die eine erste verstellbare Lastsignaldrossel (16) aus einer gegenüber den anderen ersten verstellbaren Lastsignaldrosseln (16) verbreiterten Schlitz (23') und /oder verkleinerten Bohrung (22') besteht.

## Claims

1. Hydraulic steering device with load signal, comprising a displacer unit (10) and a control unit having an inner control piston (8) and an outer control sleeve (9), which both have radial and axial channels communicating with one another and with the displacer unit (10) and the channels form
- a main line, which leads from an inlet connection (2) via the displacer unit (10) and from a steering cylinder (6) to a return connection (3) and in which are disposed between the inlet connection (2) and the displacer unit (10) an adjustable inlet throttle (12), between the displacer unit (10) and the steering cylinder (6) two adjusting throttles (13, 14) and between the displacer unit (10) and the return connection (3) an adjustable return throttle (15), and
- a first secondary line, which leads from the main line downstream of the adjustable inlet throttle (12) to the return connection (3) and in which are disposed in series a first and a second load signal throttle (16, 17), and
- a second secondary line, which connects the load signal connection (7) to the inlet connection (2) and for said purpose opens into the first secondary line at the level between the first and the second adjustable load signal throttle (16, 17),
- in the neutral position the first adjustable load signal throttle (16) having a positive overlap relative to the other adjusting throttles,
characterized in that the deflection angle (33) of the positive overlap of the first adjustable load signal throttle (16) is equal to or smaller than the deflection angle (34) of the negative overlap of the adjustable inlet throttle (12) and that the deflection angles (35, 36, 37) of the negative overlaps of the adjustable return throttle (15), the second adjustable load signal throttle (17) and the two adjusting throttles (13, 14) are smaller than the deflection angle (33) of the positive overlap of the first adjustable load signal throttle (16).

2. Hydraulic steering device according to claim 1,
characterized in that the deflection angles (35, 36, 37) of the adjustable return throttle (15), the second adjustable load signal throttle (17) and adjusting throttles (13, 14) are in said order designed to be smaller each by an increasing amount than the deflection angle (33) of the first adjustable load signal throttle (16).

3. Hydraulic steering device according to claim 1,
characterized in that the open throttle cross section of the first adjustable load signal throttle (16) in the region of the start of opening of the adjustable return throttle (15) is designed so as to remain substantially constant over a predeterminable distance (38) of the deflection angle (33).

4. Hydraulic steering device according to claim 3,
characterized in that in the neutral position the diameter of the bores (22) and the width of the slots (23) of the first adjustable load signal throttles (16) form a positive overlap, which is smaller than the deflection angle (35) of the negative overlap of the return throttle (15) and at least one of the first adjustable load signal throttles (16) forms a distance (39) of the positive overlap, which distance is greater than the deflection angle (35) of the negative overlap of the return throttle (15).

5. Hydraulic steering device according to claim 4,
characterized in that the one first adjustable load signal throttle (16) comprises a wider slot (23') and/or a smaller bore (22') than the other first adjustable load signal throttles (16).

## Revendications

1. Système hydraulique de direction avec un signal de charge, consistant en une unité de refoulement (10) et en une unité de commande avec un piston intérieur de commande (8) et un manchon extérieur de commande (9), les deux possédant en commun des canaux radiaux et axiaux, qui communiquent avec l'unité de refoulement (10), dans lequel :
- les canaux forment une conduite principale qui va depuis un raccordement d'entrée (2), par l'intermédiaire de l'unité de refoulement (10), et depuis un vérin de direction (6) à un raccordement de retour (3), conduite dans laquelle sont disposés, entre le raccordement d'entrée (2) et l'unité de refoulement (10), un étranglement d'entrée réglable (12), entre l'unité de refoulement (10) et le vérin de direction (6), deux étranglements de réglage (13, 14), et entre l'unité de refoulement (10) et le raccordement de retour (3), un étranglement de retour, réglable, (15) et
- les canaux forment une première conduite auxiliaire allant de la conduite principale en amont de l'étranglement d'entrée réglable (12) au raccordement de retour (3), conduite dans laquelle sont disposés en série un premier étranglement et un deuxième étranglement de signal de charge (16, 17) et
- les canaux forment une deuxième conduite auxiliaire, qui relie le raccordement de signal de charge (7) au raccordement d'arrivée (2) et qui pour cela débouche dans la première conduite auxiliaire à la hauteur située entre le premier et le deuxième étranglement de signal de charge, réglable, (16, 17),
- le premier étranglement réglable de signal de charge (16) en position neutre possédant par rapport à l'autre étranglement de réglage un recouvrement positif,
caractérisé en ce que
- l'angle de déviation (33) du recouvrement positif du premier signal de charge réglable (16) est égal ou inférieur à l'angle de déviation (34) du recouvrement négatif de l'étranglement d'entrée réglable (12) et
- l'angle de déviation (35, 36, 37) des recouvrements négatifs de l'étranglement réglable de retour (15), du deuxième étranglement de signal de charge réglable (17) et des deux étranglements de réglage (13, 14) est inférieur à l'angle de déviation (33) du recouvrement positif du premier étranglement réglable (16).

2. Système hydraulique de direction selon la revendication 1,
caractérisé en ce que
l'angle de déviation (35, 36, 37) de l'étranglement réglable de retour (15), du deuxième étranglement de signal de charge réglable (17) et des étranglements de réglage (13, 14) sont conçus dans cet ordre avec une amplitude qui devient respectivement plus grande, mais qui est inférieure à celle de l'angle de déviation (33) du premier étranglement réglable de signal de charge (16).

3. Système hydraulique de direction selon la revendication 1,
caractérisé en ce que
la section transversale ouverte du premier étranglement réglable de signal de charge (16) est conçue de façon à demeurer dans une très large mesure constante dans la zone du début de l'ouverture de l'étranglement réglable de retour (15) sur une distance (38), que l'on peut déterminer au préalable, de l'angle de déviation (33)

4. Système hydraulique de direction selon la revendication 3,
caractérisé en ce que
• dans la position neutre le diamètre des alésages (22) et la largeur de la fente (23) des premiers étranglements réglables de signal de charge (16) forment un recouvrement positif, qui est inférieur à l'angle de déviation (35) du recouvrement négatif de l'étranglement de retour (15) et
• au moins l'un des premiers étranglements réglables de signal de charge (16) fournit une distance (39) du recouvrement positif, qui est plus grande que l'angle de déviation (35) du recouvrement négatif de l'étranglement de retour (15).

5. Système hydraulique de direction selon la revendication 4,
caractérisé en ce que
l'un des premiers étranglement réglable de signal de charge (16) consiste en une fente (23') élargie en regard de l'autre premier étranglement réglable de signal de charge (16) et/ou en un alésage rétréci (22').
